# FASCICULE DE BREVET EUROPEEN

(11) **EP 3 011 723 B1**
(45) Date de publication et mention de la délivrance du brevet: **21.02.2018**
(21) Numéro de dépôt: 14736909.4
(22) Date de dépôt: 19.06.2014
(51) Int. Cl.: H04L 29/08, H04L 29/06

(54) **PROCEDE D'ACQUISITION D'UN MODULE DE CODAGE/DECODAGE DANS UN RESEAU DE TELECOMMUNICATIONS**
VERFAHREN ZUR ERFASSUNG EINES CODIERUNGS-/DECODIERUNGSMODUL IN EINEM TELEKOMMUNIKATIONSNETZ
METHOD OF ACQUISITION OF A CODING/DECODING MODULE IN A TELECOMMUNICATIONS NETWORK

(30) Priorité: 21.06.2013 FR 1355943
(43) Date de publication de la demande: 27.04.2016
(73) Titulaire: Orange, 75015 Paris (FR)
(72) Inventeur: CHATRAS, Bruno, F-75012 Paris (FR); CUBAUD, Sébastien, F-35320 Crevin (FR)
(74) Mandataire: Cochet, Bertrand
(86) Numéro de dépôt international: PCT/FR2014/051525
(87) Numéro de publication internationale: WO 2014/202910

(56) Documents cités:
- WO-A1-2006/132573
- US-A1- 2005 157 660

## Description

L'invention se situe dans le domaine du transport de données lors d'une session de communication, et concerne plus particulièrement un procédé d'acquisition d'un module de codage/décodage pour encoder/décoder un ou plusieurs flux de données associés à une session entre deux entités.

Il est connu d'utiliser un module de codage/décodage, encore appelé codec, pour l'encodage et/ou décodage d'un flux de données. Un tel module permet de compresser et décompresser les données du flux échangé entre deux entités. Il répond ainsi à différents besoins, aussi bien en termes de qualité de restitution des données transportées qu'en termes de limitation des ressources réseaux utilisées lors du transport de données. Ces modules trouvent leurs applications dans de nombreux domaines tels que la téléphonie, la diffusion de contenu en direct, la visioconférence, etc. Il existe par ailleurs un grand nombre de modules de codage/décodage, chacun ayant des spécificités qui lui sont propres.

Un module de codage/décodage est utilisé lorsque deux entités d'un réseau de communication échangent des flux de données, notamment lorsque les flux échangés sont de type vidéo, voix, image haute définition, etc. Cet échange n'est cependant possible que lorsque chacune des deux entités dispose d'un même module de codage/décodage. Les deux entités, avant de pouvoir échanger un flux de données, s'accordent généralement sur le module de codage/décodage qui sera utilisé pour leurs échanges lors d'une étape de négociation de module de codage/décodage.

La multiplication du nombre de modules de codage/décodage existants accroît considérablement la probabilité pour deux entités utilisateurs d'être dans une configuration où elles ne disposent pas d'un module de codage/décodage commun pour leurs échanges ultérieurs. De même, une communication garantissant certains critères de qualité de service ou encore étant limitée par des contraintes du réseau, peut nécessiter l'usage d'un module de codage/décodage particulier lors du transport des flux de données associés à cette communication. La communication répondant à ces critères et/ou contraintes ne peut être établie en l'absence du module de codage/décodage requis.

Pour éviter ces situations d'échec, la solution la plus courante dans les réseaux actuels consiste à insérer entres les deux entités, une entité intermédiaire disposant des modules de codage/décodage utilisés par chacune des deux autres entités, de manière à transcoder les flux de données associés à la communication. Cette solution comporte néanmoins des inconvénients intrinsèquement liés à l'introduction même d'entités intermédiaires entre les entités utilisateurs, notamment une complexification des procédures d'établissement de sessions, une dégradation de la qualité d'expérience, des performances réseau diminuées, etc.

Il existe un besoin d'une solution moins complexe à mettre en oeuvre pour un opérateur de télécommunications.

Un document technique, daté du 25 mars 2011, du Secteur de la normalisation des télécommunications de l'Union Internationale des Télécommunications, intitulé « HSTP-AMSR, AMS Requirements », décrit les exigences relatives à une architecture multimédia avancée, l'AMS (Advanced Multimedia System). Ce document évoque la possibilité dans une telle architecture pour une entité utilisateur de télécharger des modules de codage/décodage mis à disposition par des entités du réseau ou d'autres entités utilisateurs, lorsque cette entité utilisateur ne dispose pas du module requis.

Les modalités techniques pour mettre en oeuvre ce téléchargement ne sont pas décrites, en particulier les critères de déclenchement du téléchargement et la manière dont une entité peut déterminer quels modules sont à télécharger et sur quel(s) Le document WO 2006/132573 A1 (ERICSSON TELEFON AB L M [SE]; SKOG ROBERT [SE]) 14 décembre 2006 (2006-12-14) décrit un procédé d'acquisition dans un réseau de communication, d'au moins une application utilisée pour réaliser une communication entre une première et une deuxième entité. Un des buts de l'invention est de remédier à des insuffisances/inconvénients de l'état de la technique et/ou d'y apporter des améliorations.

Selon un premier aspect l'invention concerne un procédé d'acquisition dans un réseau de communication, d'au moins un module de codage/décodage, pour encoder/décoder au moins un flux de données relatif à une session entre une première et une deuxième entités, ledit procédé étant mis en oeuvre par la première entité et comprenant les étapes suivantes :
a/ réception d'un message applicatif en provenance de la deuxième entité comprenant une liste d'au moins un module de codage/décodage proposé pour la session ;
b/ sélection à partir de la liste reçue d'au moins un module de codage/décodage à acquérir ;
c/ acquisition dudit au moins un module auprès d'une entité fournisseur, un dialogue applicatif associé à la session restant établi entre les deux entités pendant l'acquisition ;
d/ encodage/décodage dudit au moins un flux de données relatif à la session au moyen dudit au moins un module acquis.

Le procédé d'acquisition permet à deux entités d'échanger des flux de données, à l'aide d'un module de codage/décodage qui n'était pas disponible initialement auprès d'une des entités. Il rend ainsi possible une communication qui n'était possible entre deux entités que par l'intermédiaire d'entités intermédiaires de transcodage au sein du réseau. En levant cette contrainte, le procédé permet notamment d'éviter l'utilisation d'entités intermédiaires lors d'un échange de flux de données entre deux entités ne disposant pas de modules de codage/décodage compatibles. La procédure d'établissement de sessions est simplifiée et la qualité d'expérience augmentée. L'utilisation des ressources réseaux est également améliorée.

Le procédé permet en outre un transport de données relatif à une session entre deux entités indépendamment des modules de codage/décodage que ces dernières ont à leur disposition. L'acquisition d'un module de codage/décodage permet également à une entité d'importer des fonctionnalités logicielles pour le codage/décodage qu'elle ne possède pas matériellement. Il n'est donc pas nécessaire pour une entité de disposer de fonctionnalités matérielles natives pour le codage/décodage. La conception matérielle d'une entité mettant en oeuvre le procédé s'en trouve de fait simplifiée. Il est à noter que ce dernier point rend l'entité conforme à l'exigence MED-101 du document « HSTP-AMSR, AMS Requirements » précédemment cité, relative aux terminaux dans une architecture AMS.

L'acquisition d'un module de codage/décodage offre par ailleurs un moyen de prévenir l'obsolescence de l'entité mettant en oeuvre le procédé, en la rendant compatible avec des entités disposant des modules de codage/décodage les plus récents.

Il est à noter que l'entité mettant en oeuvre le procédé ne se restreint pas à une entité utilisateur (terminal mobile, lecteur multimédia, téléphone SIP, etc.). Il peut également s'agir par exemple d'une entité réseau mettant en oeuvre un transcodage (passerelle VoIP, Session Border Controller, etc.).

Selon l'invention, le procédé d'acquisition propose l'acquisition d'au moins un module de codage/décodage pour l'encodage/décodage d'au moins un flux de données relatif à une session en cours d'établissement, la liste de modules de codage/décodage proposée par la deuxième entité ne comprenant pas de module de codage/décodage commun aux deux entités, le procédé comprenant en outre les étapes suivantes :
- envoi d'un message de mise en attente à destination de la deuxième entité, permettant de maintenir le dialogue applicatif associé à la session ;
- établissement de la session, une fois ledit au moins un module de codage/décodage disponible pour utilisation.

L'acquisition d'un module en cours d'établissement d'une session entre deux entités, et le maintien d'un dialogue applicatif ouvert associé à la session, permettent pour une entité de répondre positivement à la demande d'une autre entité d'établissement d'une session comportant un échange de données. Il est ainsi possible d'augmenter le nombre d'appels réussis entre deux entités, un appel réussi étant défini comme une demande d'établissement de session pour laquelle une session a effectivement pu être établie. L'envoi d'un message de mise en attente à destination de l'entité à l'initiative du dialogue applicatif associé à la session, permet en particulier de faire patienter cette dernière entité le temps de l'acquisition du module requis pour l'échange de données entre les entités. Une interruption brutale de la communication entre les deux entités peut ainsi être évitée, et la qualité de l'expérience utilisateur être améliorée.

Selon une caractéristique particulière le procédé d'acquisition comprend en outre l'émission d'un message d'attente à destination de l'utilisateur de la première entité avant établissement de la session, cette émission étant conditionnée par une utilisation de la première entité.

La qualité d'expérience peut également être améliorée par l'émission d'un message d'attente à destination de l'utilisateur de l'entité invitée à établir une session. Cette émission est avantageusement déclenchée par une utilisation de l'entité invitée. Il s'agit par exemple d'une annonce audio dite de patience diffusée lorsque l'utilisateur invité décroche son téléphone. Lorsque le procédé est mis en oeuvre par une entité de type client XMPP (*eXtensible Messaging and Presence Protocol*) ou un navigateur, ce message d'attente est par exemple un texte affiché à l'écran sur une action de l'utilisateur (e.g. un clic sur un bouton dans une interface graphique).

Selon une autre caractéristique particulière le dialogue applicatif associé à la session entre deux entités pendant l'acquisition est ouvert en association avec une session établie, les première et deuxième entités ayant négocié une utilisation d'un module de codage/décodage commun pour l'encodage/décodage d'au moins un flux de données associées à la session, comprenant en outre une étape de modification de la session afin d'encoder/décoder ledit au moins un flux de données au moyen du module de codage/décodage acquis.

Le procédé d'acquisition permet à deux entités ayant établi une session avec un module de codage/décodage qu'elles ont en commun, de modifier le module de codage/décodage utilisé lors du transport de données en cours de session. Une communication avec un niveau de qualité supérieur peut en particulier être proposée au cours d'une session déjà établie. Le confort, par exemple d'écoute ou de visionnage, des utilisateurs peut ainsi être amélioré. Le procédé permet en outre de ne pas contraindre l'établissement d'une communication entre deux entités par le délai d'acquisition du module de codage/décodage. L'acquisition du module en cours de session ne nécessite par ailleurs pas d'interrompre la session. Le procédé permet de prévenir l'insatisfaction utilisateur résultant de telles interruptions.

Selon une autre caractéristique particulière, lors de l'étape a/ du procédé d'acquisition, la liste reçue comprend au moins une information relative à au moins une entité apte à fournir un module de codage/décodage.

L'association d'au moins une information relative à au moins une entité fournisseur avec un module de codage/décodage permet une identification rapide et aisée d'entités fournisseurs capables de délivrer le module de codage/décodage. Dans le cas où plusieurs entités sont susceptibles de fournir un même module de codage/décodage, ces informations permettent également de définir une politique de sélection d'une entité fournisseur.

Selon une autre caractéristique particulière ladite au moins une information relative à au moins une entité apte à fournir un module de codage/décodage est insérée dans la liste par une entité réseau intermédiaire.

Les informations relatives à au moins une entité apte à fournir un module de codage/décodage peuvent avantageusement être obtenues depuis une entité réseau intermédiaire. Il est ainsi possible pour une première entité proposant à une seconde entité l'utilisation d'un module de codage/décodage particulier, d'obtenir ces informations depuis un proxy SIP (*Session Initiation Protocol*) appartenant indifféremment au réseau de la première entité, de la seconde entité, ou d'un réseau de transit.

Selon une autre caractéristique particulière, ledit au moins un module de codage/décodage à acquérir est sélectionné en fonction d'au moins une propriété du module et d'au moins une contrainte associée à la session.

Une sélection en fonction de propriétés d'un module présente l'avantage de pouvoir choisir un module adapté à des contraintes particulières associées à la session. Il peut s'agir par exemple de propriétés relatives à la qualité de service demandée, aux ressources réseaux nécessaires au transport de données associé à la session, ou encore de sensibilité à la perte de paquets.

Selon une autre caractéristique particulière, le procédé d'acquisition comprend en outre une détermination de l'entité fournisseur en fonction d'au moins une information associée à au moins l'une des première et deuxième entités.

L'entité est ainsi autonome pour déterminer l'entité fournisseur.

Selon une autre caractéristique particulière, l'information relative à l'entité fournisseur est obtenue par l'intermédiaire d'un protocole de configuration dynamique.

L'obtention d'une information relative à une entité fournisseur par l'intermédiaire d'un protocole de configuration permet davantage de flexibilité dans la configuration de l'entité ayant besoin d'acquérir un module de codage/décodage. En particulier un paramétrage préalable à l'acquisition du module par l'utilisateur de l'entité, ou par son fabricant est évité. Il n'est en outre pas nécessaire d'émettre des hypothèses fortes sur la structure des identités et/ou des adresses IP pour pouvoir en déduire l'adresse d'une entité fournisseur. Cela permet par exemple de s'affranchir d'une convention universelle pour la construction à partir d'un nom de domaine d'une adresse web relative à une entité fournisseur, ou de l'interrogation d'un serveur de nom d'entités fournisseurs.

Selon un deuxième aspect l'invention concerne une entité agencée pour acquérir dans un réseau de communication, au moins un module de codage/décodage, ce module étant utilisé par l'entité pour encoder/décoder au moins un flux de données relatif à une session entre l'entité et une seconde entité, comprenant :
- un module de gestion, agencé pour gérer un dialogue applicatif associé à la session ;
- un premier module d'envoi/réception, agencé pour recevoir depuis la seconde entité une liste de modules de codage/décodage proposée pour la session ;
- un module de sélection, agencé pour sélectionner à partir de la liste de modules de codage/décodage reçue, au moins un module de codage/décodage à acquérir ;
- un second module d'envoi/réception, agencé pour envoyer une demande pour un module de codage/décodage auprès d'une entité fournisseur, et recevoir le module en réponse à cette demande ;
- des moyens de mémorisation, agencé pour mémoriser au moins un module de codage/décodage.

Les avantages énoncés pour le procédé d'acquisition selon l'une quelconque des caractéristiques du premier aspect sont directement transposables à l'entité selon le deuxième aspect.

Le module de traitement permet par exemple de compiler si nécessaire le module de codage/décodage avant son envoi, dans un langage compréhensible par l'entité qui en demande l'acquisition. Le temps nécessaire à la préparation par la première entité du module de codage/décodage pour utilisation peut ainsi être réduit.

Selon un troisième aspect l'invention concerne un système dans un réseau de communication, ce système comprenant :
- au moins une entité selon le deuxième aspect ;
- une entité fournisseur, dans un réseau de communication, agencé pour fournir au moins un module de codage/décodage à ladite au moins une entité selon le deuxième aspect pour encoder/décoder au moins un flux de données relatif à une session entre la première entité et une seconde entité, comprenant :
   - des moyens de mémorisation, agencé pour mémoriser au moins un module de codage/décodage ;
   - un module d'envoi/réception, agencé pour recevoir une demande d'acquisition d'un module de codage/décodage depuis ladite au moins une entité selon le deuxième aspect, et lui envoyer le module en réponse à cette demande.

Selon une autre caractéristique particulière, l'entité fournisseur du système selon le troisième aspect comprend en outre un module de traitement, agencé pour rendre le module d'encodage/décodage, utilisable par ladite au moins une entité selon le deuxième aspect dès son acquisition.

Selon une autre caractéristique particulière, l'entité fournisseur du système selon le troisième aspect comprend en outre un module de calcul, agencé pour calculer un temps de mise à disposition du module de codage/décodage auprès de ladite au moins une entité selon le deuxième aspect.

Selon un quatrième aspect, l'invention concerne également un programme pour une entité, comprenant des instructions de code de programme destinées à commander l'exécution des étapes du procédé d'acquisition précédemment décrit, lorsque ledit programme est exécuté par ladite entité et un support d'enregistrement lisible par une entité sur lequel est enregistré un programme pour une entité.

Selon un cinquième aspect, l'invention concerne également un programme pour une entité fournisseur, comprenant des instructions de code de programme destinées à commander l'exécution des étapes du procédé d'acquisition précédemment décrit, lorsque ledit programme est exécuté par ladite entité fournisseur et un support d'enregistrement lisible par une entité fournisseur sur lequel est enregistré un programme pour une entité fournisseur.

L'invention sera mieux comprise à l'aide de la description suivante de modes de réalisation particuliers, en référence aux dessins annexés sur lesquels :
- la figure 1 représente un système d'acquisition d'un module de codage/décodage ;
- la figure 2 représente une entité mettant en oeuvre un procédé d'acquisition de module de codage/décodage selon un mode particulier de réalisation ;
- le figure 3 représente une entité fournisseur selon un mode particulier de réalisation ;
- les figures 4a et 4b représentent des étapes d'un procédé d'acquisition d'un module de codage/décodage dans un mode particulier de réalisation.

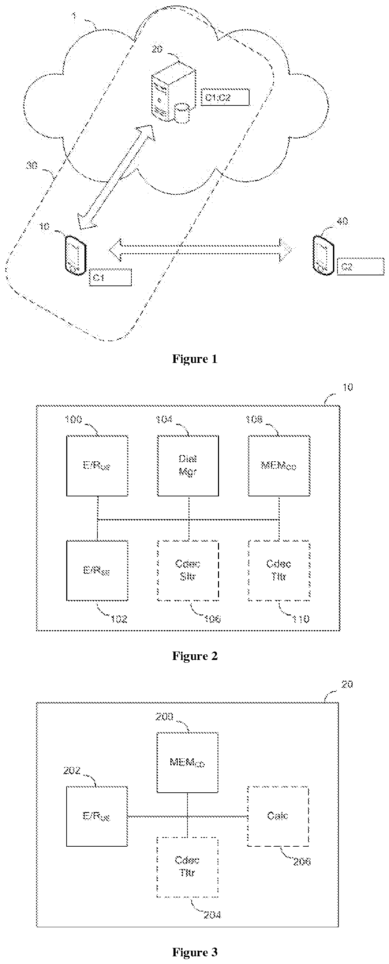

La figure 1 représente un système pour acquérir un module de codage/décodage dans un réseau de communication 1. Le réseau 1 est par exemple un réseau d'opérateur de télécommunications. Il comprend une entité fournisseur 20, dont l'une des fonctions est de mémoriser des modules de codage/décodage pour les proposer en téléchargement à des entités requérant un tel module. Un système d'acquisition 30 d'un module de codage/décodage est constitué d'une entité 10 acquérant ce module et de l'entité fournisseur 20 de ce module.

Dans le mode de réalisation décrit, une deuxième entité 40 établit une communication avec la première entité 10. Les entités 10, 40 sont par exemple un ordinateur personnel, un téléphone, un terminal mobile ou encore une tablette.

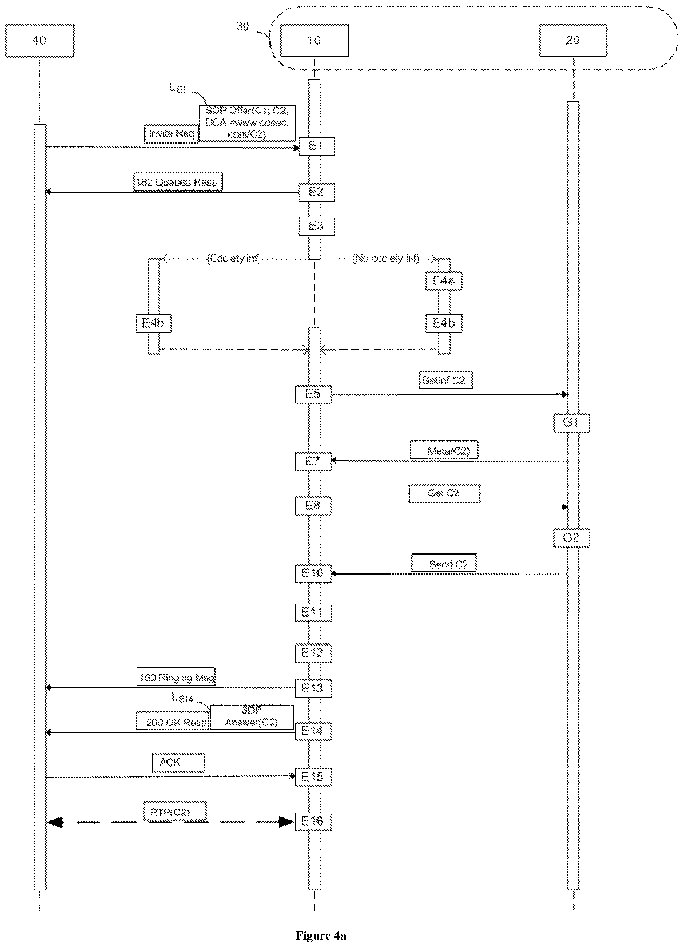

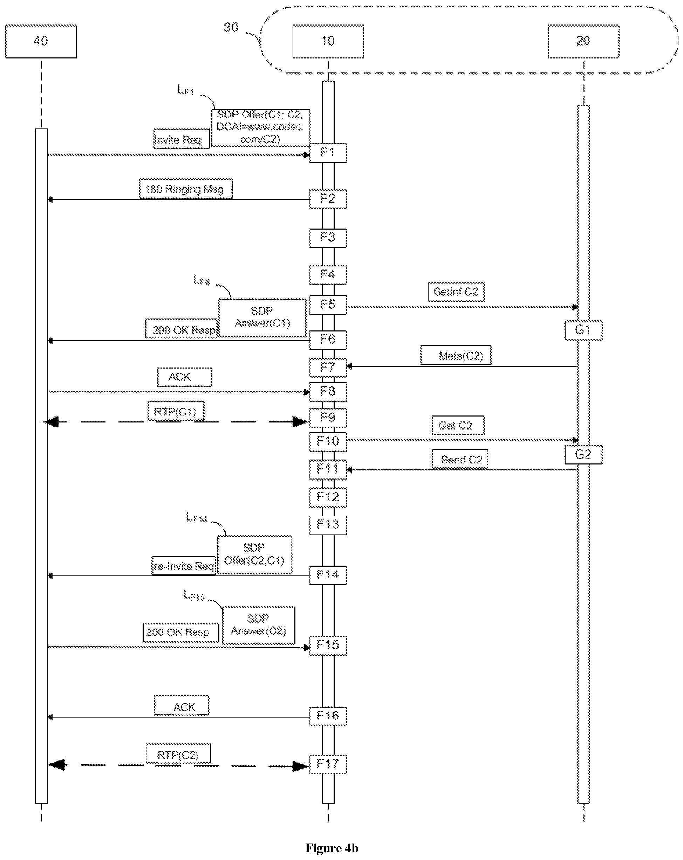

Les figures 4a et 4b décrivent les étapes du procédé d'acquisition d'un module de codage/décodage selon deux modes de réalisation particuliers.

La figure 4a présente une acquisition réalisée au cours de l'établissement d'une session multimédia entre les première et deuxième entités 10, 40. La session multimédia correspond par exemple au flux audio échangé lors d'une conversation téléphonique, aux flux associés à une session de visio-conférence, ou à tout autre échange nécessitant le transport d'un flux multimédia entre les première 10 et deuxième 40 entités.

La deuxième entité 40 dispose des modules de codage/décodage C1 et C2. La première entité 10 ne dispose d'aucun de ces deux modules. Ces entités mettent en oeuvre par exemple le protocole applicatif SIP.

Dans une étape E1, la première entité 10 reçoit un message SIP INVITE en provenance de la deuxième entité 40. Un dialogue applicatif débute alors entre les deux entités. Ce dialogue applicatif est dans le présent mode de réalisation constitué des échanges SIP entre les deux entités.

Le message SIP INVITE reçu à l'étape E1 inclut en outre une offre SDP (*Session Description Protocol*) telle que décrite par l'IETF (*Internet Engineering Task Force*) dans le RFC (*Request for Comments*) 3264. Cette offre SDP comprend une liste L_{E1} de modules de codage/décodage. La liste L_{E1} est constituée de deux identifiants des modules de codage/décodage C1 et C2 proposés par la deuxième entité 40 pour l'établissement de la session multimédia. L'adresse d'une entité fournisseur 20 est également associée à l'identifiant C2 dans l'offre SDP. Cette adresse identifie une entité fournisseur auprès de laquelle peut être obtenu le module de codage/décodage C2, par exemple « *www.codec.com*/*C2* ». A titre d'exemple illustratif les modules de codage/décodage proposés par la deuxième entité 40 sont un module C1 de codage/décodage G.711 et un module C2 de codage/décodage AMR-WB (*Adaptive Multi-Rate Wideband*).

Lors d'une étape E2, la première entité 10 vérifie la liste L_{E1} et détermine qu'elle ne dispose d'aucun module de codage/décodage en commun avec la deuxième entité 40. La première entité 10 envoie alors un message « *182 Queued* » pour indiquer qu'elle est temporairement indisponible et mettre en attente la deuxième entité 40. Cela se traduit par exemple par l'émission d'une tonalité particulière ou d'une annonce vocale destinées à faire patienter le demandeur. De plus la première entité n'alerte pas le demandé de l'arrivée d'un appel (i.e. la sonnerie du téléphone ne retentit pas, aucun message ne s'affiche sur l'écran). Ceci permet de ne pas dégrader la qualité d'expérience perçue par le demandé. Dans un autre mode de réalisation, le demandé est normalement informé de l'arrivée d'un appel (e.g. la sonnerie du téléphone retentit), et une annonce l'invitant à patienter est diffusée lorsqu'il décroche.

La première entité 10 sélectionne ensuite, dans une étape E3, un module de codage à acquérir parmi l'offre de modules L_{E1} reçue précédemment de la deuxième entité 40. Dans le présent mode de réalisation, la première entité 10 choisit d'acquérir le module de codage/décodage d'identifiant C2. Cette sélection est réalisée en fonction des propriétés du module de codage/décodage et de son adéquation au type de session multimédia demandé. Il peut notamment s'agir de propriétés du module de codage/décodage relatives à la qualité de service souhaitée pour la session à établir : par exemple, son de qualité ordinaire, ou son haute définition. Il peut également s'agir de propriétés liées aux ressources réseaux consommées, par exemple la bande passante requise par un module de codage/décodage. Dans le cas d'un réseau où des pertes de paquets sont fréquentes, la sensibilité d'un module de codage/décodage à la perte de paquets peut également avantageusement être prise en compte dans le choix du module. Les informations relatives aux propriétés des modules de codage/décodage sont associées à la liste de modules de l'offre SDP L_{E1} reçue par la première entité 10 à l'étape E1. Il n'existe cependant pas de caractère limitatif quant à la manière dont ces informations sont obtenues. Dans un autre mode de réalisation, ces informations sont par exemple obtenues par interrogation d'une base de référence des modules de codage/décodage. Cette base est par exemple stockée localement par la première entité 10, ou sur un serveur distant au sein du réseau.

Dans une étape E4b, la première entité 10 sélectionne une entité fournisseur. Dans le mode de réalisation décrit, il s'agit de l'entité fournisseur d'adresse *www.codec.com.*

Dans le cas où aucune entité fournisseur n'a pu être déterminée à partir des informations contenues dans l'offre SDP L_{E1}, dans une étape E4a qui précède l'étape E4b, la première entité 10 obtient des adresses d'entités fournisseur grâce à un mécanisme de découverte d'entités fournisseurs. L'adresse d'une entité fournisseur est par exemple obtenue à partir d'un identifiant tel que l'adresse IP de la deuxième entité 40 dans le réseau, et d'une interrogation DNS (pour *Domain Name Server*) inverse à partir de cette adresse. Dans un autre mode de réalisation, l'entité fournisseur peut également être déterminée à partir d'informations obtenues par l'intermédiaire d'un protocole de configuration dynamique (DHCP, BBF TR-69, OMA DM, etc.). Ces informations sont par exemple obtenues lors de l'acquisition d'une adresse IP (*Internet Protocol*) par la première entité 10.

Dans une étape E5, la première entité 10 envoie une demande à destination de l'entité fournisseur sélectionnée précédemment à l'étape E4b pour acquérir le module de codage/décodage d'identifiant C2. Cette demande est accompagnée de paramètres précisant à l'entité fournisseur 20 que le module de codage/décodage doit être fourni compilé afin d'être exécutable par son système d'exploitation. Les différentes options précisant les traitements requis de la part de l'entité fournisseur sur le module de codage/décodage avant envoi sont envoyées avec la demande d'acquisition du module. Il s'agit par exemple de paramètres dans un lien URL (*Uniform Ressource Locator*). Il est à noter que selon le nombre de modules de codage/décodage à acquérir par la première entité 10, plusieurs demandes d'acquisition peuvent être envoyées en parallèle à destination d'une ou de plusieurs entités fournisseurs.

Dans une étape G1, l'entité fournisseur 20 reçoit la demande d'acquisition du module de codage/décodage transmise par la première entité 10, et estime un temps de mise à disposition du module compilé. Dans un mode de réalisation où la compilation du module n'est pas demandée, non nécessaire, ou encore non proposée par l'entité fournisseur 20, cette étape est optionnelle.

Lors d'une étape E7, la première entité 10 reçoit le temps estimé de mise à disposition du module de codage/décodage compilé avec les informations relatives aux différentes versions du module de codage/décodage dont dispose l'entité fournisseur 20. Ces informations listent en particulier l'ensemble des formats (e.g., fichiers de scripts interprétables, fichiers compilés) sous lequel le module de codage/décodage C2 est disponible. Elles sont par exemple envoyées à la première entité 10 sous la forme d'un fichier de métadonnées XML. Lorsqu'aucun format ne répond aux critères formulés par la première entité 10 lors de l'étape E5, l'entité fournisseur 20 redirige la demande d'acquisition vers une autre entité fournisseur. Si l'entité fournisseur ne connaît pas d'autre entité fournisseur, elle rejette la demande d'acquisition de la première entité 10 (non représenté sur la figure 4a). Il est à noter que le temps estimé de mise à disposition du module de codage/décodage compilé peut avantageusement être utilisé par la première entité 10 pour calculer et informer l'utilisateur d'un temps restant estimé avant établissement de la communication. L'expérience utilisateur est ainsi améliorée.

Dans une étape E8, la première entité 10 confirme sa demande d'acquisition du module de codage/décodage d'identifiant C2 en choisissant un ou plusieurs formats proposés par l'entité fournisseur 20 qui répondent à ses besoins ou contraintes d'utilisation du module.

L'entité fournisseur 20 compile le module de codage/décodage demandé, puis lui applique un algorithme de compression dans une étape G2. Dans un autre mode de réalisation, cette étape est soit réalisée partiellement, soit optionnelle. C'est notamment le cas lorsque le module de codage/décodage ne nécessite pas d'être compilé pour être utilisé par la première entité 10, ou lorsque les données à envoyer sont en faible quantité et ne nécessitent par conséquent pas d'être compressées avant envoi.

Dans une étape E10, l'entité fournisseur 20 envoie le module de codage/décodage C2 dans le ou les formats demandés par la première entité 10.

Le module de codage/décodage C2 est ensuite préparé par la première entité 10 afin d'être rendu prêt à l'utilisation dans une étape E11. Cette préparation consiste par exemple à stocker le module localement pour le rendre accessible aux applications ou primitives du système d'exploitation de la première entité 10 chargées de l'encodage et du décodage.

Une fois le module de codage/décodage acquis et prêt à être utilisé, l'utilisateur de la première entité 10 en est informé lors d'une étape E12. Cette information est par exemple communiquée à l'utilisateur de la première entité 10 par l'affichage d'un message à l'écran, ou l'émission d'une sonnerie.

Puis, dans une étape E13, la première entité 10 informe également la deuxième entité 40 par l'envoi d'un message « *180 Ringing* » qu'elle est prête à établir le transport de flux de données. Il est à noter que ce message est envoyé seulement une fois le module de codage/décodage C2 acquis. L'expérience utilisateur perçue n'est par conséquent pas dégradée.

Lorsque l'utilisateur de la première entité 10 décroche, la première entité 10 envoie (étape E14) une réponse *200 OK* incluant une réponse SDP L_{E14} indiquant à la deuxième entité 40 que le module de codage/décodage C2 a été choisi.

La première entité 10 reçoit un message d'acquittement de la deuxième entité 40 (étape E15), et la session multimédia utilisant le module de codage/décodage C2 est établie (étape E16).

Le mode de réalisation décrit comprend une étape E4a de découverte d'entités fournisseurs, et E4b de sélection d'une entité fournisseur. Dans un autre mode de réalisation les étapes E4a et E4b sont optionnelles. Dans ce cas l'association entre un module de codage/décodage et une entité fournisseur susceptible de le fournir est définie par configuration statique de la première entité 10.

La figure 4b présente une acquisition réalisée pendant une session multimédia déjà établie entre les deux entités 10, 40. Dans ce mode de réalisation, la première entité 10 dispose du module de codage/décodage d'identifiant C1, et la deuxième entité 40 des modules de codage/décodage C1 et C2. Dans une étape F1, la première entité 10 reçoit un message SIP INVITE en provenance de la deuxième entité 40. Un dialogue applicatif débute alors entre les deux entités. Ce dialogue applicatif est dans le présent mode de réalisation constitué des échanges SIP entre les deux entités.

Le message SIP INVITE reçu à l'étape F1 inclut en outre une offre SDP. Cette offre SDP comprend une liste L_{F1} de modules de codage/décodage. La liste L_{F1} est constituée de deux identifiants de modules de codage/décodage C1 et C2 proposés par la deuxième entité 40 pour l'établissement de la session multimédia. L'adresse d'une entité fournisseur est également associée à l'identifiant C2 dans l'offre SDP. Cette adresse indique une entité fournisseur auprès de laquelle peut être obtenu le module de codage/décodage identifié par C2, par exemple « *www.codec.com*/*C2* »*.*

Lors d'une étape F2, la première entité 10 indique à la deuxième entité 40 que l'utilisateur est notifié de la session entrante par l'envoi d'un message « *180 Ringing* »*.* Par exemple, une sonnerie émise par la première entité 10 en informe l'utilisateur.

La première entité 10 sélectionne ensuite, dans une étape F3, un premier module de codage C1 commun aux deux entités et un deuxième module de codage C2 à acquérir parmi l'offre de modules L_{F1} reçue précédemment de la deuxième entité 40. Cette sélection du module de codage/décodage d'identifiant C2 à acquérir est réalisée de manière similaire à l'étape E3 décrite en relation avec le premier mode de réalisation. Le premier module de codage C1 est disponible pour établir la session multimédia.

Dans une étape F4, la première entité 10 sélectionne une entité fournisseur. Dans le mode de réalisation décrit il s'agit de l'entité fournisseur d'adresse *www.codec.com.* Cette étape F4 est similaire à l'étape E4b décrite en relation avec le premier mode de réalisation.

Dans le cas où aucune entité fournisseur n'a pu être déterminée à partir des informations contenues dans l'offre SDP L_{F1}, la première entité 10 obtient des entités fournisseur grâce à un mécanisme de découverte d'entités fournisseurs non représenté sur la figure 4b, comme décrit précédemment en relation avec le premier mode de réalisation.

Dans une étape F5, la première entité 10 envoie une demande d'acquisition du module de codage/décodage d'identifiant C2 à destination de l'entité fournisseur choisie précédemment. Cette demande est accompagnée de paramètres précisant à l'entité fournisseur 20 que le module de codage/décodage doit être fourni compilé afin d'être exécutable par son système d'exploitation. Cette étape F5 est similaire à l'étape E5 décrite précédemment en relation avec le premier mode de réalisation.

Dans une étape G1, l'entité fournisseur 20 reçoit la demande d'acquisition du module de codage/décodage, et estime un temps de mise à disposition du module compilé. Dans un mode de réalisation où la compilation du module n'est pas demandée, non nécessaire, ou encore non proposée par l'entité fournisseur, cette étape est optionnelle.

La première entité 10 envoie ensuite (étape F6) une réponse « *200 OK* » incluant une réponse SDP L_{F6} indiquant à la deuxième entité 40 que le module de codage/décodage d'identifiant C1 a été choisi pour l'établissement de la session multimédia.

Lors d'une étape F7, la première entité 10 reçoit le temps estimé de mise à disposition du module de codage/décodage compilé avec les informations relatives aux différentes versions du module de codage/décodage dont dispose l'entité fournisseur 20. Ces informations listent en particulier l'ensemble des formats (e.g., fichiers de scripts interprétables, fichiers compilés) sous lequel le module de codage/décodage est disponible. Elles sont par exemple envoyées à la première entité 10 sous la forme d'un fichier de métadonnées XML. Lorsqu'aucun format ne répond aux critères formulés par la première entité 10 lors de l'étape F5, l'entité fournisseur 20 redirige la demande d'acquisition vers une autre entité fournisseur. Si l'entité fournisseur ne connaît pas d'autre entité fournisseur, elle rejette la demande d'acquisition de la première entité 10 (non représenté sur la figure 4b).

La première entité 10 reçoit un message d'acquittement de la deuxième entité 40 (étape F8) en réponse au message « *200 OK* », Une première session multimédia utilisant le module de codage/décodage d'identifiant C1 est alors établie (étape F9). Les première et deuxième entités 10, 40 n'ont ainsi pas à attendre la fin de l'acquisition du module de codage/décodage C2 pour échanger des flux multimédia, ces derniers étant encodés dans une première phase à l'aide du module de codage/décodage d'identifiant C1.

Dans une étape F10, la première entité 10 confirme sa demande d'acquisition du module de codage/décodage d'identifiant C2 en choisissant un ou plusieurs formats proposés par l'entité fournisseur 20 qui répondent à ses besoins ou contraintes d'utilisation du module.

L'entité fournisseur 20 compile le module de codage/décodage demandé, puis lui applique un algorithme de compression dans une étape G2. Dans un autre mode de réalisation, cette étape est soit réalisée partiellement, soit optionnelle. C'est notamment le cas lorsque le module de codage/décodage ne nécessite pas d'être compilé pour être utilisé par la première entité 10, ou lorsque les données à envoyer sont en faible quantité et ne nécessitent par conséquent pas d'être compressées avant envoi.

Dans une étape F11, la première entité 10 reçoit depuis l'entité fournisseur 20 le module de codage/décodage dans le ou les formats demandés.

Le module de codage/décodage C2 est ensuite préparé par la première entité 10 afin d'être rendu prêt à l'utilisation dans une étape F12. Cette préparation consiste par exemple à stocker le module localement pour le rendre accessible aux applications ou primitives du système d'exploitation de la première entité 10 chargées de l'encodage et du décodage.

Une fois le module de codage/décodage d'identifiant C2 acquis et prêt à être utilisé, l'utilisateur de la première entité 10 en est informé lors d'une étape F13. Cette information est par exemple communiquée à l'utilisateur de la première entité 10 par l'affichage d'un message à l'écran.

Puis dans une étape F14, la première entité 10 demande à modifier la session multimédia par l'envoi d'un message « *re-INVITE* » incluant une offre SDP L_{F14} avec l'identifiant C2 du module acquis, seul ou en première position. Ceci permet de notifier la deuxième entité 40 que le module de codage/décodage d'identifiant C2 est maintenant disponible pour l'encodage et/ou décodage des flux multimédia.

La première entité 10 reçoit un message « *200 OK* » lors d'une étape F15, lui indiquant que la deuxième entité 40 a accepté la demande de modification.

La première entité 10 acquitte par un message ACK la réception du message de réponse « *200 OK* » (étape F16), et la session multimédia se poursuit en utilisant le module de codage/décodage C2 (étape F17).

Dans ce second mode de réalisation, les étapes F2 à F12 du procédé d'acquisition ont été décrites séquentiellement ; cependant les échanges entre la première entité 10 et la deuxième entité 40 d'une part, et entre la première entité 10 et l'entité fournisseur 20 d'autre part sont indépendants. Aussi l'étape F4 peut être réalisée parallèlement à l'étape F3, de même les étapes F2, F6, F8 et F9 considérées successivement peuvent également être réalisées en parallèle des étapes F3, F5, F7, F10, F11, F12 et F13 considérées successivement.

Dans un autre mode de réalisation, l'étape F4 est optionnelle. Dans ce cas, l'association entre un module de codage/décodage et une entité fournisseur susceptible de le fournir est définie par configuration statique de la première entité 10.

Dans les modes de réalisation décrits les étapes E3 et F3 sont également optionnelles. Une politique d'acquisition de modules de codage/décodage consistant pour la première entité 10 à acquérir systématiquement tout module qu'elle est invitée à utiliser et dont elle ne dispose pas peut par exemple être définie.

Il est à noter que dans un autre mode de réalisation l'adresse de l'entité fournisseur obtenue lors des étapes E1 et F1 n'est pas nécessairement unique. Plusieurs entités fournisseur peuvent en effet être susceptibles de fournir un même module de codage/décodage. Dans un autre mode de réalisation, d'autres informations relatives aux entités fournisseurs sont avantageusement fournies sous la forme de paramètres dans l'offre SDP L_{E1}. Ces informations sont par exemples relatives aux modalités de délivrance ainsi qu'aux traitements effectués sur un module de codage/décodage avant envoi par une entité fournisseur. Toujours dans un autre mode de réalisation de nombreuses politiques de sélection sont possibles quant à la sélection de l'entité fournisseur. Il est par exemple possible de choisir une entité fournisseur en fonction de ses capacités d'acheminement d'un module, de sa capacité à traduire un module de codage/décodage dans un langage machine compréhensible de l'entité destinataire du module, de sa localisation au sein du réseau, etc.

Il n'existe par ailleurs pas de caractère limitatif quant aux types de données transportées et aux types de module de codage/décodage utilisés lors de ce transport entre les entités 10 et 40. Le flux de données transporté peut également être un flux vidéo, une combinaison de flux audio et vidéo, ou plus généralement de tout type de flux multimédia. Le système permet en particulier d'acquérir tout type de module de codage/décodage.

Dans un mode particulier de réalisation, la deuxième entité 40 peut elle-même être entité fournisseur. Dans ce cas, il n'existe pas d'intermédiaire entre les première et deuxième entités 10 et 40 pour l'acquisition du module de codage/décodage.

Dans un autre mode de réalisation, le procédé d'acquisition d'un module de codage/décodage est mis en oeuvre par des entités intermédiaires du réseau, telles que des entités de transcodage, ces dernières ayant par exemple un rôle de transcodeur entre deux terminaux utilisateurs. Elles permettent par exemple de transcoder un flux encodé avec un module de codage/décodage M1 en un flux encodé avec un module de codage/décodage M2.

Dans un autre mode de réalisation, les informations relatives à une entité fournisseur et à un module de codage/décodage sont insérées par une entité réseau intermédiaire dans la liste de modules de codage/décodage proposée pour la session entre la première et la deuxième entité. Cette entité réseau intermédiaire est par exemple un proxy SIP qui relaie les messages SIP entre les deux entités.

Les modes de réalisation ont été décrits avec une mise en oeuvre basée sur le protocole SIP. Il n'existe cependant pas de caractère limitatif quant aux technologies d'échanges utilisées. L'invention peut notamment être adaptée pour être mise en oeuvre au-dessus des protocoles HTTP (*Hypertext Transfer Protocol*) ou toute autre suite de protocoles intégrant une procédure de négociation de module de codage/décodage.

Les modes de réalisation peuvent également être adaptés pour une entité de type client RTC-Web. Les informations inclues dans une offre SDP sont alors transmises par l'intermédiaire d'un script d'un serveur RTC-Web sous forme d'une offre SDP comme dans le cas du protocole SIP ou d'un équivalent utilisant une autre syntaxe (XML, JSON,...).

Les protocoles utilisés pour le dialogue applicatif entre les deux entités 10, 40 ne sont en outre pas nécessairement identiques. Le procédé d'acquisition est dans ce cas adapté pour faire intervenir des entités intermédiaires dont le rôle est de traduire les échanges entre les deux entités 10, 40.

La figure 2 représente une première entité 10 adaptée pour acquérir un module de codage/décodage selon un mode particulier de réalisation. Elle comprend notamment :
- un module de gestion 104, agencé pour gérer un dialogue applicatif associé à une session entre la première entité 10 et une deuxième entité ;
- un premier module d'envoi/réception 100, agencé pour recevoir depuis la deuxième entité une liste de modules de codage/décodage proposée pour une session à établir et pour plus généralement envoyer et recevoir des messages relatifs au dialogue applicatif avec la deuxième entité ;
- un module de sélection 106, agencé pour sélectionner à partir de la liste de modules de codage/décodage reçue, au moins un module de codage/décodage à acquérir ;
- un second module d'envoi/réception 102, agencé pour envoyer une demande pour un module de codage/décodage auprès d'une entité fournisseur, et recevoir ledit module en réponse à ladite demande ;
- des moyens de mémorisation 108, agencé pour mémoriser au moins un module de codage/décodage.
- un module de traitement 110, agencé pour préparer le module de codage/décodage afin de le rendre prêt à utiliser.

Les moyens de mémorisation 108 sont par exemple une zone mémoire, une zone tampon (ou « buffer ») ou bien encore un disque dur externe.

Dans un autre mode de réalisation, la première entité 10 ne comporte pas de module de sélection 106. La première entité 10 applique par exemple une politique d'acquisition de modules de codage/décodage consistant à acquérir systématiquement tout module qu'elle est invitée à utiliser et dont elle ne dispose pas.

Dans un autre mode de réalisation, la première entité 10 ne comprend pas de module de traitement 110. C'est notamment le cas lorsqu'un module de codage/décodage acquis par la première entité 10 ne nécessite pas de traitements avant d'être utilisé, ou lorsque ces traitements sont réalisés par une autre entité avant réception du module.

La figure 3 représente une entité fournisseur 20 selon un mode particulier de réalisation. Elle comprend notamment :
- des moyens de mémorisation 200, agencé pour mémoriser au moins un module de codage/décodage ;
- un module d'envoi/réception 202, agencé pour recevoir une demande d'acquisition d'un module de codage/décodage depuis une entité, et lui envoyer ledit module en réponse à ladite demande ;
- un module de traitement 204, agencé pour rendre le module d'encodage/décodage utilisable par dès son acquisition par une entité requérante ;
- un module de calcul 206 agencé pour calculer un temps de mise à disposition du module de codage/décodage auprès de l'entité.

Dans un autre mode de réalisation, l'entité fournisseur 20 ne comporte pas de module de traitement 204. C'est notamment le cas lorsqu'un module de codage/décodage ne nécessite pas de traitements ou que ces traitements sont mis en oeuvre par exemple par l'entité ayant demandé à acquérir le module à sa réception.

Dans un autre mode de réalisation, l'entité fournisseur 20 ne comprend pas de module de calcul 206.

Il est également à noter que dans un autre mode particulier de réalisation, lorsque deux entités souhaitent établir une session multimédia mais que seule l'une d'elle dispose du module de codage/décodage requis pour la session souhaitée, l'autre entité peut avantageusement jouer le rôle d'entité fournisseur. Une entité utilisateur jouant également le rôle d'entité fournisseur comprend notamment un module de sélection, agencé pour sélectionner à partir d'une liste de modules de codage/décodage qu'elle a à sa disposition, au moins un module de codage/décodage à fournir, et un module d'envoi/réception, agencé pour recevoir une demande pour un module de codage/décodage, et l'envoyer en réponse à la demande. Ce mode de réalisation est particulièrement adapté à deux entités fonctionnant sous un même système d'exploitation.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 100, 102, 104, 106 et 110 sont agencés pour mettre en oeuvre le procédé d'acquisition précédemment décrit. Il s'agit de préférence de modules logiciels comprenant des instructions logicielles pour faire exécuter les étapes du procédé d'acquisition précédemment décrit, mises en oeuvre par une entité. L'invention concerne donc aussi :
- un programme pour une entité, comprenant des instructions de code de programme destinées à commander l'exécution des étapes du procédé d'acquisition précédemment décrit, lorsque ledit programme est exécuté par ladite entité ;
- un support d'enregistrement lisible par une entité sur lequel est enregistré le programme pour une entité.

De même les modules 202, 204, et 206 sont agencés pour mettre en oeuvre le procédé d'acquisition précédemment décrit. Il s'agit de préférence de modules logiciels comprenant des instructions logicielles pour faire exécuter les étapes du procédé d'acquisition précédemment décrit, mises en oeuvre par une entité fournisseur. L'invention concerne donc aussi :
- un programme pour une entité fournisseur, comprenant des instructions de code de programme destinées à commander l'exécution des étapes du procédé d'acquisition précédemment décrit, lorsque ledit programme est exécuté par ladite entité fournisseur ;
- un support d'enregistrement lisible par une entité fournisseur sur lequel est enregistré le programme pour une entité fournisseur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé d'acquisition dans un réseau de communication, d'au moins un module de codage/décodage, pour encoder/décoder au moins un flux de données relatif à une session en cours d'établissement entre une première et une deuxième entité, ledit procédé étant mis en oeuvre par la première entité et comprenant les étapes suivantes :
a/ réception (E1) d'un message applicatif en provenance de ladite deuxième entité comprenant une liste d'au moins un module de codage/décodage proposé pour ladite session, ladite liste comprenant au moins une information relative à au moins une entité fournisseur apte à fournir un module de codage/décodage ;
b/ sélection (E3) à partir de la liste reçue d'au moins un module de codage/décodage à acquérir après une détermination par la première entité que lesdites entités ne disposent d'aucun module de codage/ décodage en commun;
c/ acquisition (E10) dudit au moins un module auprès d'une entité fournisseur, un dialogue applicatif associé à la session restant établi entre les deux entités pendant l'acquisition par l'envoi d'un message de mise en attente à destination de la seconde entité ;
d/ établissement de la session utilisant le module acquis pour l'encodage/décodage (E16) dudit au moins un flux de données relatif à ladite session.

2. Procédé d'acquisition selon la revendication 1, comprenant en outre l'émission d'un message d'attente à destination de l'utilisateur de ladite première entité avant établissement de ladite session, ladite émission étant conditionnée par une utilisation de ladite première entité.

3. Procédé d'acquisition selon la revendication 1, ledit dialogue applicatif étant ouvert en association avec une session établie, lesdites première et deuxième entités ayant négocié une utilisation d'un module de codage/décodage commun pour ledit encodage/décodage d'au moins un flux de données associées à la session, comprenant en outre une étape de modification (F16) de ladite session afin d'encoder/décoder ledit au moins un flux de données au moyen du module de codage/décodage acquis.

4. Procédé d'acquisition selon la revendication 1, dans lequel ladite au moins une information relative à au moins une entité apte à fournir un module de codage/décodage est insérée dans ladite liste par une entité réseau intermédiaire.

5. Procédé d'acquisition selon la revendication 1, dans lequel ledit au moins un module à acquérir est sélectionné (E3) en fonction d'au moins une propriété du module et d'au moins une contrainte associée à la session.

6. Procédé d'acquisition selon la revendication 1, comprenant en outre une détermination de l'entité fournisseur en fonction d'au moins une information associée à au moins l'une desdites première et deuxième entités.

7. Procédé d'acquisition selon la revendication 1, dans lequel une information relative à ladite entité fournisseur est obtenue par l'intermédiaire d'un protocole de configuration dynamique.

8. Entité (10) agencée pour acquérir dans un réseau de communication (1), au moins un module de codage/décodage, ledit module étant utilisé par l'entité pour encoder/décoder au moins un flux de données relatif à une session en cours d'établissement entre l'entité (10) et une seconde entité (40), comprenant :
- un module de gestion (104), agencé pour gérer un dialogue applicatif associé à la session ;
- un premier module d'envoi/réception (100), agencé pour recevoir depuis la seconde entité une liste de modules de codage/décodage proposée pour ladite session, ladite liste comprenant au moins une information relative à au moins une entité fournisseur apte à fournir un module de codage/décodage ;
- un module de sélection (106), agencé pour sélectionner à partir de la liste de modules de codage/décodage reçue, au moins un module de codage/décodage à acquérir après une détermination par la première entité que lesdites entités ne disposent d'aucun module de codage/décodage en commun;
- un second module d'envoi/réception (102), agencé pour envoyer une demande pour un module de codage/décodage auprès d'une entité fournisseur (20), et recevoir ledit module en réponse à ladite demande, un dialogue applicatif associé à la session restant établi entre les deux entités pendant l'acquisition par l'envoi d'un message de mise en attente à destination de la seconde entité ;
- des moyens de mémorisation (108), agencé pour mémoriser au moins un module de codage/décodage.

9. Système (30) dans un réseau de communication (1), ledit système (30) comprenant :
- au moins une entité (10) selon la revendication 8 ;
- entité fournisseur (20), dans un réseau de communication (1), agencé pour fournir au moins un module de codage/décodage à ladite au moins une entité selon la revendication 8 pour encoder/décoder au moins un flux de données relatif à une session en cours d'établissement entre ladite première entité et une seconde entité, comprenant :
- des moyens de mémorisation (200), agencé pour mémoriser au moins un module de codage/décodage ;
- un module d'envoi/réception (202), agencé pour recevoir une demande d'acquisition d'un module de codage/décodage depuis ladite au moins une entité selon la revendication 8, et lui envoyer ledit module en réponse à ladite demande.

10. Système (30) selon la revendication 9 dans lequel ladite entité fournisseur (20) comprend en outre un module de traitement (201), agencé pour rendre le module d'encodage/décodage, utilisable par ladite au moins une entité selon la revendication 8 dès son acquisition.

11. Système (30) selon la revendication 9, dans lequel ladite entité fournisseur (20) comprend en outre un module de calcul (206), agencé pour calculer un temps de mise à disposition du module de codage/décodage auprès de ladite au moins une entité selon la revendication 8.

12. Programme pour une entité (10), comprenant des instructions de code de programme destinées à commander l'exécution des étapes du procédé selon l'une des revendications 1 à 7, lorsque ledit programme est exécuté par ladite entité (10).

13. Support d'enregistrement lisible par une entité sur lequel est enregistré le programme selon la revendication 12.

## Patentansprüche

1. Verfahren zum Erwerb, in einem Kommunikationsnetzwerk, mindestens eines Codier-/Decodiermoduls, um mindestens einen Datenstrom bezüglich einer im Aufbau befindlichen Sitzung zwischen einer ersten und einer zweiten Instanz zu codieren/decodieren, wobei das Verfahren von der ersten Instanz durchgeführt wird und die folgenden Schritte enthält:
a/ Empfang (E1) einer Anwendungsnachricht von der zweiten Instanz, die eine Liste von mindestens einem für die Sitzung vorgeschlagenen Codier-/Decodiermodul enthält, wobei die Liste mindestens eine Information bezüglich mindestens einer Anbieter-Instanz enthält, die ein Codier-/Decodiermodul anbieten kann;
b/ Auswahl (E3), ausgehend von der empfangenen Liste, mindestens eines zu erwerbenden Codier-/Decodiermoduls nach einer Bestimmung durch die erste Instanz, dass die Instanzen über kein gemeinsames Codier-/Decodiermodul verfügen;
c/ Erwerb (E10) des mindestens einen Moduls bei einer Anbieter-Instanz, wobei ein der Sitzung zugeordneter Anwendungsdialog zwischen den zwei Instanzen während des Erwerbs durch das Senden einer Wartestellungs-Nachricht an die zweite Instanz aufgebaut bleibt;
d/ Aufbau der Sitzung unter Verwendung des für die Codierung/Decodierung des mindestens einen Datenstroms bezüglich der Sitzung erworbenen Moduls (16).

2. Erwerbsverfahren nach Anspruch 1, das außerdem das Senden einer Wartenachricht an den Benutzer der ersten Instanz vor dem Aufbau der Sitzung enthält, wobei das Senden durch eine Verwendung der ersten Instanz bedingt wird.

3. Erwerbsverfahren nach Anspruch 1, wobei der Anwendungsdialog in Zuordnung zu einer aufgebauten Sitzung eröffnet wird, wobei die ersten und zweiten Instanzen eine Verwendung eines gemeinsamen Codier-/Decodiermoduls für die Codierung/Decodierung mindestens eines der Sitzung zugeordneten Datenstroms ausgehandelt haben, das außerdem einen Änderungsschritt (F16) der Sitzung enthält, um den mindestens einen Datenstrom mittels des erworbenen Codier-/Decodiermoduls zu codieren/decodieren.

4. Erwerbsverfahren nach Anspruch 1, wobei die mindestens eine Information bezüglich mindestens einer Instanz, die ein Codier-/Decodiermodul anbieten kann, von einer Zwischen-Netzwerk-Instanz in die Liste eingefügt wird.

5. Erwerbsverfahren nach Anspruch 1, wobei das mindestens eine zu erwerbende Modul abhängig von mindestens einer Eigenschaft des Moduls und mindestens einer der Sitzung zugeordneten Bedingung ausgewählt wird (E3).

6. Erwerbsverfahren nach Anspruch 1, das außerdem eine Bestimmung der Anbieter-Instanz abhängig von mindestens einer mindestens einer der ersten und zweiten Instanzen zugeordneten Information enthält.

7. Erwerbsverfahren nach Anspruch 1, wobei eine Information bezüglich der Anbieter-Instanz mittels eines dynamischen Konfigurationsprotokolls erhalten wird.

8. Instanz (10), die eingerichtet ist, um in einem Kommunikationsnetzwerk (1) mindestens ein Codier-/Decodiermodul zu erwerben, wobei das Modul von der Instanz verwendet wird, um mindestens einen Datenstrom bezüglich einer im Aufbau befindlichen Sitzung zwischen der Instanz (10) und einer zweiten Instanz (40) zu codieren/decodieren, die enthält:
- ein Verwaltungsmodul (104), das eingerichtet ist, um einen der Sitzung zugeordneten Anwendungsdialog zu verwalten;
- ein erstes Sende-/Empfangsmodul (100), das eingerichtet ist, um von der zweiten Instanz eine für die Sitzung vorgeschlagene Liste von Codier-/Decodiermodulen zu empfangen, wobei die Liste mindestens eine Information bezüglich mindestens einer Anbieter-Instanz enthält, die ein Codier-/Decodiermodul anbieten kann;
- ein Auswahlmodul (106), das eingerichtet ist, um ausgehend von der empfangenen Liste von Codier-/Decodiermodulen mindestens ein zu erwerbendes Codier-/Decodiermodul nach einer Bestimmung durch die erste Instanz, dass die Instanzen über kein gemeinsames Codier-/Decodiermodul verfügen, auszuwählen;
- ein zweites Sende-/Empfangsmodul (102), das eingerichtet ist, um eine Anforderung für ein Codier-/Decodiermoduls bei einer Anbieter-Instanz (20) zu senden, und das Modul als Antwort auf die Anforderung zu empfangen, wobei ein der Sitzung zugeordneter Anwendungsdialog zwischen den zwei Instanzen während des Erwerbs durch das Senden einer Wartestellungs-Nachricht an die zweite Instanz aufgebaut bleibt;
- Speichereinrichtungen (108), die eingerichtet sind, um mindestens ein Codier-/Decodiermodul zu speichern.

9. System (30) in einem Kommunikationsnetzwerk (1), wobei das System (30) enthält:
- mindestens eine Instanz (10) nach Anspruch 8;
- eine Anbieter-Instanz (20), in einem Kommunikationsnetzwerk (1), die eingerichtet ist, um mindestens ein Codier-/Decodiermodul der Instanz nach Anspruch 8 anzubieten, um mindestens einen Datenstrom bezüglich einer im Aufbau befindlichen Sitzung zwischen der ersten Instanz und einer zweiten Instanz zu codieren/decodieren, die enthält:
- Speichereinrichtungen (200), die eingerichtet sind, um mindestens ein Codier-/Decodiermodul zu speichern;
- ein Sende-/Empfangsmodul (202), das eingerichtet ist, um eine Erwerbsanforderung eines Codier-/Decodiermoduls von der mindestens einen Instanz nach Anspruch 8 zu empfangen, und ihr als Antwort auf die Anforderung das Modul zu senden.

10. System (30) nach Anspruch 9, wobei die Anbieter-Instanz (20) außerdem ein Verarbeitungsmodul (201) enthält, das eingerichtet ist, um das Codier-/Decodiermodul ab seinem Erwerb von der mindestens einen Instanz nach Anspruch 8 nutzbar zu machen.

11. System (30) nach Anspruch 9, wobei die Anbieter-Instanz (20) außerdem ein Rechenmodul (206) enthält, das eingerichtet ist, um eine Zeit der Zurverfügungstellung des Codier-/Decodiermoduls bei der mindestens einen Instanz nach Anspruch 8 zu berechnen.

12. Programm für eine Instanz (10), das Programmcodeanweisungen enthält, die dazu bestimmt sind, die Ausführung der Schritte des Verfahrens nach einem der Ansprüche 1 bis 7 zu steuern, wenn das Programm von der Instanz (10) ausgeführt wird.

13. Aufzeichnungsträger, der von einer Instanz lesbar ist, auf dem das Programm nach Anspruch 12 aufgezeichnet ist.

## Claims

1. Method of acquisition in a communication network, of at least one coding/decoding module, so as to encode/decode at least one data stream relating to a session undergoing establishment between a first and a second entity, said method being implemented by the first entity and comprising the following steps:
a/ reception (E1) of an application message originating from said second entity comprising a list of at least one coding/decoding module proposed for said session, said list comprising at least one item of information relating to at least one provider entity able to provide a coding/decoding module;
b/ selection (E3) on the basis of the list received of at least one coding/decoding module to be acquired after determination by the first entity that said entities do not have any coding/decoding module in common;
c/ acquisition (E10) of said at least one module from a provider entity, an application dialog associated with the session remaining established between the two entities during the acquisition by the dispatching of a placement-on-hold message destined for second entity;
d/ establishment of the session by using the module acquired for encoding/decoding (E16) of said at least one data stream relating to said session.

2. Method of acquisition according to Claim 1, furthermore comprising the emission of a hold message destined for the user of said first entity before establishment of said session, said emission being conditioned by a use of said first entity.

3. Method of acquisition according to Claim 1, said application dialog being opened in association with an established session, said first and second entities having negotiated a use of a common coding/decoding module for said encoding/decoding of at least one data stream associated with the session, furthermore comprising a step (F16) of modifying said session so as to encode/decode said at least one data stream by means of the coding/decoding module acquired.

4. Method of acquisition according to Claim 1, in which said at least one item of information relating to at least one entity able to provide a coding/decoding module is inserted into said list by an intermediary network entity.

5. Method of acquisition according to Claim 1, in which said at least one module to be acquired is selected (E3) as a function of at least one property of the module and of at least one constraint associated with the session.

6. Method of acquisition according to Claim 1, furthermore comprising a determination of the provider entity as a function of at least one item of information associated with at least one of said first and second entities.

7. Method of acquisition according to Claim 1, in which an item of information relating to said provider entity is obtained by way of a dynamic configuration protocol.

8. Entity (10) designed to acquire in a communication network (1), at least one coding/decoding module, said module being used by the entity to encode/decode at least one data stream relating to a session undergoing establishment between the entity (10) and a second entity (40), comprising:
- a management module (104), designed to manage an application dialog associated with the session;
- a first dispatch/reception module (100), designed to receive from the second entity a proposed list of coding/decoding modules for said session, said list comprising at least one item of information relating to at least one provider entity able to provide a coding/decoding module;
- a selection module (106), designed to select on the basis of the received list of coding/decoding modules, at least one coding/decoding module to be acquired after determination by the first entity that said entities do not have any coding/decoding module in common;
- a second dispatch/reception module (102), designed to dispatch a request for a coding/decoding module from a provider entity (20), and to receive said module in response to said request, an application dialog associated with the session remaining established between the two entities during the acquisition by the dispatching of a placement-on-hold message destined for second entity;
- storage means (108), designed to store at least one coding/decoding module.

9. System (30) in a communication network (1), said system (30) comprising:
- at least one entity (10) according to Claim 8;
- provider entity (20), in a communication network (1), designed to provide at least one coding/decoding module to said at least one entity according to Claim 8 so as to encode/decode at least one data stream relating to a session undergoing establishment between said first entity and a second entity, comprising:
- storage means (200), designed to store at least one coding/decoding module;
- a dispatch/reception module (202), designed to receive a request for acquisition of a coding/decoding module from said at least one entity according to Claim 8, and to dispatch said module to it in response to said request.

10. System (30) according to Claim 9, in which said provider entity (20) furthermore comprises a processing module (201), designed to render the encoding/decoding module, usable by said at least one entity according to Claim 8 as soon as it is acquired.

11. System (30) according to Claim 9, in which said provider entity (20) furthermore comprises a calculation module (206), designed to calculate a time of making available of the coding/decoding module at said at least one entity according to Claim 8.

12. Program for an entity (10), comprising program code instructions intended to control the execution of the steps of the method according to one of Claims 1 to 7, when said program is executed by said entity (10).

13. Recording medium readable by an entity and on which the program according to Claim 12 is recorded.
